(19) Europäisches Patentamt
European Patent Office
Office européen des brevets

(11) EP 4 154 711 A1

(12) EUROPEAN PATENT APPLICATION
published in accordance with Art. 153(4) EPC

(43) Date of publication:
29.03.2023 Bulletin 2023/13

(21) Application number: 21809549.5

(22) Date of filing: 22.04.2021

(51) International Patent Classification (IPC):
*A01N 25/30* (2006.01) *A01N 25/02* (2006.01)
*A01P 13/00* (2006.01)

(52) Cooperative Patent Classification (CPC):
A01G 13/00; A01N 25/02; A01N 25/06;
A01N 25/30; A01N 43/40; A01N 43/84; A01P 13/00

(86) International application number:
PCT/CN2021/088988

(87) International publication number:
WO 2021/233057 (25.11.2021 Gazette 2021/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 21.05.2020 CN 202010438384

(71) Applicant: Maxunitech Inc.
Hangzhou, Zhejiang 310000 (CN)

(72) Inventors:
- MA, Mingliang
Hangzhou, Zhejiang 310000 (CN)
- HUANG, Mingzhi
Hangzhou, Zhejiang 310000 (CN)
- XU, Xianbo
Hangzhou, Zhejiang 310000 (CN)
- XU, Xiaoyan
Hangzhou, Zhejiang 310000 (CN)
- WANG, Furong
Hangzhou, Zhejiang 310000 (CN)
- GUO, Shijian
Hangzhou, Zhejiang 310000 (CN)
- ZHANG, Zhuoya
Hangzhou, Zhejiang 310000 (CN)
- ZHANG, Zhen
Hangzhou, Zhejiang 310000 (CN)
- ZHOU, Yueting
Hangzhou, Zhejiang 310000 (CN)

(74) Representative: Haseltine Lake Kempner LLP
One Portwall Square
Portwall Lane
Bristol BS1 6BH (GB)

# (54) HERBICIDE AUXILIARY AGENT AND USE THEREOF, HERBICIDE COMPOSITION, AND ADMINISTRATION METHOD THEREFOR

(57) Provided in the present disclosure are a herbicide auxiliary agent and the use thereof, a herbicide composition, and an application method therefor, which relate to the technical field of herbicide. The herbicide auxiliary agent comprises linear or branched $C_8$-$C_{22}$ alkyl fatty alcohol alkoxylated compound and a fatty alcohol alkoxylated compound. When the herbicide auxiliary agent provided in the present disclosure and the hydrophobic herbicide are applied in combination, by means of the mutual cooperation between the fatty alcohol alkoxylated compound and an aliphatic substituted amide, synergistic effects are produced, which can effectively improve the adsorption of the hydrophobic herbicide by soil, increase the migration rate and bioavailability of the hydrophobic herbicide in the soil, improve the activity of the hydrophobic herbicide, reduce soil pollution, and be friendly to the economy and environment.

EP 4 154 711 A1

## Description

### CROSS-REFERENCE TO RELATED APPLICATIONS

The present disclosure claims the priority of Chinese Patent Application No. 202010438384.0, filed with China National Intellectual Property Administration on May 21, 2020 and entitled "HERBICIDE AUXILIARY AGENT AND USE THEREOF, HERBICIDE COMPOSITION, AND APPLICATION METHOD THEREOF", the entire contents of which are incorporated herein by reference.

### FIELD OF TECHNOLOGY

The present disclosure relates to the technical field of herbicides, and in particular to herbicide auxiliary agent and use thereof, herbicide composition, and application method thereof.

### BACKGROUND

Herbicides applied to soil are mostly absorbed through plant roots. When a hydrophobic herbicide is applied to soil, it has adsorption/desorption behaviors with the soil. However, most of the hydrophobic herbicides are basically present on the soil surface and difficult to move due to the soil adsorption, which greatly affects the mobility and bioavailability of the herbicides and reduces the herbicidal activity. Particularly, the soil with high contents of organic matters and clay may strongly adsorb some hydrophobic herbicides, resulting in the hydrophobic herbicides not be absorbed by weed roots, which affects the herbicidal activity and pollutes the soil.

### SUMMARY

A first object of the present disclosure provides, for example, a herbicide auxiliary agent. The herbicide auxiliary agent can effectively increase the mobility and solubility of a hydrophobic herbicide and alleviate the technical problems of limited migration rate and low bioavailability of the hydrophobic herbicide in soil.
The herbicide auxiliary agent provided in the present disclosure includes a fatty alcohol alkoxylated compound and an aliphatic substituted amide. The fatty alcohol alkoxylated compound is a linear or branched $C_8$-$C_{22}$ alkyl fatty alcohol alkoxylated compound.
The aliphatic substituted amide has the following general formula:

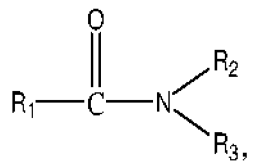

wherein $R_1$ is linear or branched $C_4$-$C_{16}$ alkyl, $R_2$ and $R_3$ are each independently H, $CH_3$ or $C_2H_5$, and $R_2$ and $R_3$ are not both H.
In one or more embodiments, the fatty alcohol alkoxylated compound includes at least one of a fatty alcohol ethoxylated compound, a fatty alcohol propoxylated compound and a fatty alcohol ethoxylated propoxylated compound.
In one or more embodiments, in the herbicide auxiliary agent, a weight ratio of the fatty alcohol alkoxylated compound to the aliphatic substituted amide ranges from 1:0.1 to 1:10, preferably 1:0.5 to 1:1.5.
A second object of the present disclosure provides, for example, use of the herbicide auxiliary agent in improving activity of a hydrophobic herbicide.
In one or more embodiments, the herbicide auxiliary agent is applied to soil at a dose of 0.1 to 50 kg/ha, for example, 1 to 20 kg/ha.
A third object of the present disclosure provides, for example, a herbicide composition, including a hydrophobic herbicide and the herbicide auxiliary agent provided in the first object of the present disclosure. A weight ratio of the hydrophobic herbicide to the herbicide auxiliary agent ranges from 1:0.6 to 1:50.
In one or more embodiments, the weight ratio of the hydrophobic herbicide to the herbicide auxiliary agent ranges from 1:1 to 1:30, for example, 1:2 to 1:20.
In one or more embodiments, the hydrophobic herbicide includes at least one of an acetyl-CoA carboxylase inhibitor, an acetolactate synthase inhibitor, a photosynthesis inhibitor, a protoporphyrinogen oxidase inhibitor, a carotenoid synthesis inhibitor, a 4-hydroxyphenylpyruvate dioxygenase inhibitor, a mitotic inhibitor, a cell division inhibitor,

a cell wall synthesis inhibitor, an auxin herbicide, an auxin transport inhibitor, cinmethylin, flamprop, maleic hydrazide, cumyluron, daimuron and indanofan.

In one or more embodiments, the acetyl-CoA carboxylase inhibitor includes at least one of clodinafop-propargyl, clethodim and pinoxaden.

In one or more embodiments, the acetolactate synthase inhibitor includes at least one of florasulam, penoxsulam, tribenuron-methyl, mesosulfuron-methyl and bispyribac-sodium.

In one or more embodiments, the photosynthesis inhibitor includes at least one of terbacil, amicarbazone, diuron, prometryn and diquat.

In one or more embodiments, the protoporphyrinogen oxidase inhibitor includes at least one of flumioxazin, sulfentrazone and saflufenacil.

In one or more embodiments, the carotenoid synthesis inhibitor includes at least one of fluridone, flurtamone, clomazone, diflufenican and norflurazon.

In one or more embodiments, the 4-hydroxyphenylpyruvate dioxygenase inhibitor includes mesotrione and/or isoxaflutole.

In one or more embodiments, the mitotic inhibitor includes at least one of benfluralin, trifluralin, prodiamine, pendimethalin, dithiopyr and chlorpropham.

In one or more embodiments, the cell division inhibitor includes at least one of alachlor, butachlor, S-metolachlor, flufenacet, mefenacet and cafenstrole.

In one or more embodiments, the cell wall synthesis inhibitor includes at least one of flupoxam, isoxaben and dichlobenil.

In one or more embodiments, the auxin herbicide includes at least one of fluroxypyr, dicamba and quinclorac.

In one or more embodiments, the auxin transport inhibitor includes naptalam and/or diflufenzopyr.

In one or more embodiments, other hydrophobic herbicides include at least one of cinmethylin, flamprop, maleic hydrazide, cumyluron, daimuron and indanofan.

In one or more embodiments, the hydrophobic herbicide is at least one selected from the group consisting of flufenacet, flumioxazin, fluridone, isoxaflutole, diclosulam, penoxsulam, sulfentrazone, saflufenacil, norflurazon, diflufenican, pendimethalin and prodiamine.

A fourth object of the present disclosure provides, for example, an application method for the herbicide composition, including the following steps: diluting the herbicide composition provided in the present disclosure with water to form a sprayable solution, and then applying the sprayable solution to a plant growth place.

In one or more embodiments, the plant growth place includes soil.

In one or more embodiments, the herbicide auxiliary agent is applied to soil at a dose of 0.1 to 50 kg/ha, for example, 1 to 20 kg/ha.

In one or more embodiments, the hydrophobic herbicide is applied to the soil at a dose of 0.01 to 40 kg/ha.

In one or more embodiments, the sprayable solution formed by the dilution includes other active components and/or agricultural adjuvants. The active component is at least one of a herbicide, a fungicide and a plant growth regulator.

When the herbicide auxiliary agent provided in the present disclosure and the hydrophobic herbicide are applied in combination, by means of the mutual cooperation between the fatty alcohol alkoxylated compound and the aliphatic substituted amide, synergistic effects are produced, which can effectively improve the adsorption/desorption behaviors of the hydrophobic herbicide in soil, increase the migration rate and bioavailability of the hydrophobic herbicide in the soil, improve the activity of the hydrophobic herbicide, reduce soil pollution, and be friendly to the economy and environment.

According to the herbicide composition provided in the present disclosure, by means of the mutual cooperation between the herbicide auxiliary agent and the hydrophobic herbicide, synergistic effects are produced, which can effectively improve the adsorption/desorption behaviors of the hydrophobic herbicide in soil, increase the migration rate and bioavailability of the hydrophobic herbicide in the soil, improve the activity of the hydrophobic herbicide, reduce soil pollution, and be friendly to the economy and environment.

## DESCRIPTION OF THE EMBODIMENTS

The technical solutions of the present disclosure will be described clearly and completely below in conjunction with examples. Apparently, the examples described are a part, but not all of the examples of the present disclosure. All other examples obtained by those of ordinary skill in the art based on the examples of the present disclosure without creative work shall fall into the protection scope of the present disclosure.

According to a first aspect of the present disclosure, the present disclosure provides a herbicide auxiliary agent, including a fatty alcohol alkoxylated compound and an aliphatic substituted amide. The fatty alcohol alkoxylated compound is a linear or branched $C_8$-$C_{22}$ alkyl fatty alcohol alkoxylated compound.

The aliphatic substituted amide has the following general formula:

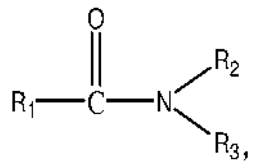

wherein $R_1$ is linear or branched $C_4$-$C_{16}$ alkyl, $R_2$ and $R_3$ are each independently H, $CH_3$ or $C_2H_5$, and $R_2$ and $R_3$ are not both H.

When the herbicide auxiliary agent provided in the present disclosure and the hydrophobic herbicide are applied in combination, by means of the mutual cooperation between the fatty alcohol alkoxylated compound and the aliphatic substituted amide, synergistic effects are produced, which can effectively improve the adsorption/desorption behaviors of the hydrophobic herbicide in soil, increase the migration rate and bioavailability of the hydrophobic herbicide in the soil, improve the activity of the hydrophobic herbicide, reduce soil pollution, and be friendly to the economy and environment.

In addition, in the herbicide auxiliary agent provided in the present disclosure, all fatty carbon chains of the fatty alcohol alkoxylated compound and the aliphatic substituted amide can be decomposed by microorganisms in the soil, and the herbicide auxiliary agent is free of metal ions and less polluting to the soil, which can effectively reduce the soil pollution.

In a typical embodiment of the present disclosure, the fatty alcohol alkoxylated compound includes at least one of a fatty alcohol ethoxylated compound, a fatty alcohol propoxylated compound and a fatty alcohol ethoxylated propoxylated compound.

The term "at least one" above means that the fatty alcohol alkoxylated compound may include any one of a fatty alcohol ethoxylated compound, a fatty alcohol propoxylated compound or a fatty alcohol ethoxylated propoxylated compound, and may also include a mixture of any two or three of a fatty alcohol ethoxylated compound, a fatty alcohol propoxylated compound or a fatty alcohol ethoxylated propoxylated compound.

In a typical embodiment of the present disclosure, when the fatty alcohol alkoxylated compound is at least one selected from the group consisting of the fatty alcohol ethoxylated compound, the fatty alcohol propoxylated compound and the fatty alcohol ethoxylated propoxylated compound, by means of the mutual cooperation between the fatty alcohol alkoxylated compound and the aliphatic substituted amide, the combination of the herbicide auxiliary agent and the hydrophobic herbicide produces higher synergistic effects, which can more effectively improve the activity of the hydrophobic herbicide, reduce the soil pollution, and be friendly to the economy and environment.

In a typical embodiment of the present disclosure, in the herbicide auxiliary agent, a weight ratio of the fatty alcohol alkoxylated compound to the aliphatic substituted amide ranges from 1:0.1 to 1:10.

Typically but not limitingly, in the herbicide auxiliary agent, the weight ratio of the fatty alcohol alkoxylated compound to the aliphatic substituted amide is, for example, 1:0.1, 1:0.2, 1:0.5, 1:0.8, 1:1, 1:1.2, 1:1.5, 1:2, 1:5, 1:8 or 1:10, for example, 1:0.5 to 1:1.5.

When the weight ratio of the fatty alcohol alkoxylated compound to the aliphatic substituted amide in the herbicide auxiliary agent ranges from 1:0.1 to 1:10, the combination of the herbicide auxiliary agent and the hydrophobic herbicide can produce better synergistic effects, which can improve the migration rate and the activity of the hydrophobic herbicide in the soil, reduce the soil pollution, and be friendly to the economy and environment. Particularly, when the weight ratio of the fatty alcohol alkoxylated compound to the weight ratio ranges from 1:0.5 to 1:1.5, the combination of the herbicide auxiliary agent and the hydrophobic herbicide can produce better synergistic effects, and the hydrophobic herbicide has higher activity.

According to a second aspect of the present disclosure, the present disclosure provides use of the herbicide auxiliary agent described in the first aspect of the present disclosure in improving activity of a hydrophobic herbicide.

In a typical embodiment of the present disclosure, the herbicide auxiliary agent is applied to soil at a dose of 0.1 to 50 kg/ha, for example, 1 to 20 kg/ha.

Typically but not limitingly, the herbicide auxiliary agent is applied to the soil, for example, at a dose of 0.1, 0.2, 0.5, 0.8, 1, 1.5, 2, 5, 8, 10, 15, 20, 25, 30, 35, 40, 45 or 50 kg/ha.

When the herbicide auxiliary agent provided in the present disclosure is applied to the soil at a dose of 0.1 to 50 kg/ha, the combination of the herbicide auxiliary agent and the hydrophobic herbicide can produce good synergetic effects and improve the migration ability and solubility of the hydrophobic herbicide in the soil, which thereby can effectively improve the activity of the hydrophobic herbicide, reduce the soil pollution and be friendly to the economy and environment. Particularly, when the herbicide auxiliary agent is applied to the soil at a dose of 1 to 20 kg/ha, the combination of the herbicide auxiliary agent and the hydrophobic herbicide produces better synergetic effects, and the hydrophobic herbicide has higher activity.

According to a third aspect of the present disclosure, the present disclosure provides a herbicide composition,

including a hydrophobic herbicide and the herbicide auxiliary agent according to the first aspect of the present disclosure. A weight ratio of the hydrophobic herbicide to the herbicide auxiliary agent ranges from 1:0.6 to 1:50, for example, 1:1 to 1:30, such as 1:2 to 1:20.

Typically but not limitingly, the weight ratio of the hydrophobic herbicide to the herbicide auxiliary agent is, for example, 1:0.6, 1:0.8, 1:1, 1:2, 1:5, 1:8, 1:10, 1:12, 1:15, 1:18, 1:20, 1:25, 1:30, 1:40 or 1:50.

In the present disclosure, when the weight ratio of the hydrophobic herbicide to the herbicide auxiliary agent in the herbicide composition ranges from 1:0.6 to 1:50, the combination of the hydrophobic herbicide and the herbicide auxiliary agent produces good synergetic effects, which can improve the activity of the hydrophobic herbicide, reduce the soil pollution, and be friendly to the economy and environment. Particularly, when the weight ratio of the hydrophobic herbicide to the herbicide auxiliary agent ranges from 1:1 to 1:30, the herbicide composition has higher bioactivity. Particularly, when the weight ratio of the hydrophobic herbicide to the herbicide auxiliary agent ranges from 1:2 to 1:20, the hydrophobic herbicide and the herbicide auxiliary agent have better synergistic effects.

In the present disclosure, the hydrophobic herbicide refers to a herbicide that has a solubility of less than 1 g, for example, less than 0.1 g, in 100 g of water at pH 7 at 20°C under standard air pressure.

In the present disclosure, the hydrophobic herbicide may be a herbicide known in The Pesticide Manual (18th Edition, 2018, British Crop Production Council).

In a typical embodiment of the present disclosure, the hydrophobic herbicide includes at least one of an acetyl-CoA carboxylase inhibitor, an acetolactate synthase inhibitor, a photosynthesis inhibitor, a protoporphyrinogen oxidase inhibitor, a carotenoid synthesis inhibitor, a 4-hydroxyphenylpyruvate dioxygenase inhibitor, a mitotic inhibitor, a cell division inhibitor, a cell wall synthesis inhibitor, an auxin herbicide, an auxin transport inhibitor, cinmethylin, flamprop, maleic hydrazide, cumyluron, daimuron and indanofan.

The term "at least one" above means that the hydrophobic herbicide may be any one selected from the group consisting of an acetyl-CoA carboxylase inhibitor, an acetolactate synthase inhibitor, a photosynthesis inhibitor, a protoporphyrinogen oxidase inhibitor, a carotenoid synthesis inhibitor, a 4-hydroxyphenylpyruvate dioxygenase inhibitor, a mitotic inhibitor, a cell division inhibitor, a cell wall synthesis inhibitor, an auxin herbicide, an auxin transport inhibitor and other hydrophobic herbicides, and or a mixture of two, three, four or more selected from the above hydrophobic herbicides.

In a typical embodiment of the present disclosure, the acetyl-CoA carboxylase inhibitor includes at least one of clodinafop-propargyl, clethodim and pinoxaden.

The term "at least one" above means that the acetyl-CoA carboxylase inhibitor may be any one of clodinafop-propargyl, clethodim or pinoxaden, or a mixture of any two or three of clodinafop-propargyl, clethodim or pinoxaden.

In a typical embodiment of the present disclosure, the acetolactate synthase inhibitor includes at least one of florasulam, penoxsulam, tribenuron-methyl, mesosulfuron-methyl and bispyribac-sodium.

The term "at least one" above means that the acetolactate synthase inhibitor may be any one of florasulam, penoxsulam, tribenuron-methyl, mesosulfuron-methyl and bispyribac-sodium, or a mixture of any two, three or four of the above.

In a typical embodiment of the present disclosure, the photosynthesis inhibitor includes at least one of terbacil, amicarbazone, diuron, prometryn and diquat.

The term "at least one" above means that the photosynthesis inhibitor may be any one of terbacil, amicarbazone, diuron, prometryn and diquat, or a mixture of any two, three, four or five of the above.

In a typical embodiment of the present disclosure, the protoporphyrinogen oxidase inhibitor includes at least one of flumioxazin, sulfentrazone and saflufenacil.

The term "at least one" above means that the protoporphyrinogen oxidase inhibitor may be any one of flumioxazin, sulfentrazone and saflufenacil, or a mixture of any two or three of the above.

In a typical embodiment of the present disclosure, the carotenoid synthesis inhibitor includes at least one of fluridone, flurtamone, clomazone, diflufenican and norflurazon.

The term "at least one" above means that the carotenoid synthesis inhibitor may be any one of fluridone, flurtamone, clomazone, diflufenican and norflurazon, or a mixture of any two, three, four or five of the above.

In a typical embodiment of the present disclosure, the 4-hydroxyphenylpyruvate dioxygenase inhibitor includes mesotrione and/or isoxaflutole.

The term "and/or" above means that the 4-hydroxyphenylpyruvate dioxygenase inhibitor may be mesotrione, isoxaflutole, or a mixture of mesotrione and isoxaflutole.

In a typical embodiment of the present disclosure, the mitotic inhibitor includes at least one of benfluralin, trifluralin, prodiamine, pendimethalin, dithiopyr and chlorpropham.

The term "and/or" above means that the mitotic inhibitor may be any one of benfluralin, trifluralin, prodiamine, pendimethalin, dithiopyr and chlorpropham, or a mixture of any two, three, four or more of the above.

In a typical embodiment of the present disclosure, the cell division inhibitor includes at least one of alachlor, butachlor, S-metolachlor, flufenacet, mefenacet and cafenstrole.

The term "at least one" above means that the cell division inhibitor may be any one of alachlor, butachlor, S-metolachlor, flufenacet, mefenacet and cafenstrole, or a mixture of any two, three or four of the above.

In a typical embodiment of the present disclosure, the cell wall synthesis inhibitor includes at least one of flupoxam, isoxaben and dichlobenil.

The term "at least one" above means that the cell wall synthesis inhibitor may be any one of flupoxam, isoxaben and dichlobenil, or a mixture of any two or three of the above.

In a typical embodiment of the present disclosure, the auxin herbicide includes at least one of fluroxypyr, dicamba and quinclorac.

The term "at least one" above means that the auxin herbicide may be any one of fluroxypyr, dicamba and quinclorac, or a mixture of any two or three of the above.

In a typical embodiment of the present disclosure, the auxin transport inhibitor includes naptalam and/or diflufenzopyr.

The term "and/or" above means that the auxin transport inhibitor may be naptalam, diflufenzopyr, or a mixture of naptalam and diflufenzopyr.

In another typical embodiment of the present disclosure, the hydrophobic herbicide is at least one selected from the group consisting of flufenacet, flumioxazin, fluridone, isoxaflutole, diclosulam, penoxsulam, sulfentrazone, saflufenacil, norflurazon, diflufenican, pendimethalin and prodiamine.

The term "at least one" above means that the hydrophobic herbicide may any one of flufenacet, flumioxazin, fluridone, isoxaflutole, diclosulam, penoxsulam, sulfentrazone, saflufenacil, norflurazon, diflufenican, pendimethalin and prodiamine, or a mixture of any two, three, four or more of the above.

When the hydrophobic herbicide is flufenacet, flumioxazin, fluridone, isoxaflutole, diclosulam, penoxsulam, sulfentrazone, saflufenacil, norflurazon, diflufenican, pendimethalin or prodiamine, the combination of the hydrophobic herbicide and the herbicide auxiliary agent produces better synergistic effects, which can more effectively improve the activity of the hydrophobic herbicide.

According to a fourth aspect of the present disclosure, the present disclosure provides an application method for the herbicide composition, including the following steps:

diluting the herbicide composition provided in the present disclosure with water to form a sprayable solution, and then applying the sprayable solution to a plant growth place.

In a typical embodiment of the present disclosure, the plant growth place includes, but not limited to, soil.

In another typical embodiment of the present disclosure, the soil includes, but not limited to, clay, sand, sandy clay, clayey sand, loam, sandy loam, black loam, etc., for example, clay and loam.

In a typical embodiment of the present disclosure, when the herbicide composition is applied to the plant growth place, the hydrophobic herbicide and the herbicide auxiliary agent may be mixed and then made into a sprayable solution to be applied, or the hydrophobic herbicide and the herbicide auxiliary agent may be respectively made into sprayable solutions to be applied respectively. When being applied respectively, the hydrophobic herbicide and the herbicide auxiliary agent are applied at an interval of not more than 30 days.

In another typical embodiment of the present disclosure, the hydrophobic herbicide and the herbicide auxiliary agent are applied at an interval of not more than 3 days.

In a typical embodiment of the present disclosure, the sprayable solution may be applied to the plant growth place through a sprayer, a spraying machine or an irrigation system.

In a typical embodiment of the present disclosure, the dose of the hydrophobic herbicide applied to soil depends on the type of the hydrophobic herbicide and the place of application. Generally, the hydrophobic herbicide is applied to soil at a dose of 0.01 to 40 kg/ha.

Typically but not limitingly, the hydrophobic herbicide is applied to the soil at a dose of 0.01, 0.02, 0.05, 0.08, 1, 2, 5, 8, 10, 12, 15, 18, 20, 25, 30, 35 or 40 kg/ha.

In a typical embodiment of the present disclosure, the herbicide auxiliary agent is applied to soil at a dose of 0.1 to 50 kg/ha, for example, 1 to 20 kg/ha.

Typically but not limitingly, the herbicide auxiliary agent is applied to the soil, for example, at a dose of 0.1, 0.2, 0.5, 0.8, 1, 2, 5, 8, 10, 15, 20, 25, 30, 35, 40, 45 or 50 kg/ha.

When the herbicide auxiliary agent provided in the present disclosure is applied to the soil at a dose of 0.1 to 50 kg/ha, the combination of the herbicide auxiliary agent and the hydrophobic herbicide can produce good synergetic effects and improve the migration ability and solubility of the hydrophobic herbicide in the soil, which thereby can effectively improve the activity of the hydrophobic herbicide, reduce the soil pollution and be friendly to the economy and environment. Particularly, when the herbicide auxiliary agent provided in the present disclosure is applied to the soil at a dose of 1 to 20 kg/ha, the combination of the herbicide auxiliary agent and the hydrophobic herbicide produces better synergetic effects.

In a typical embodiment of the present disclosure, the sprayable solution formed by the dilution further includes other active components and/or agricultural adjuvants.

In this typical embodiment of the present disclosure, the active component mainly includes at least one of a herbicide, a fungicide and a plant growth regulator. The other active components in the present disclosure are active chemicals known in The Pesticide Manual (18th Edition, 2018, British Crop Production Council).

The hydrophobic herbicide and the herbicide auxiliary agent provided in the present disclosure are mixed and made into the sprayable solution. Due to their synergetic effects, the activity of the hydrophobic herbicide can be effectively improved. The hydrophobic herbicide and the herbicide auxiliary agent may also be used in combination with other active components such as a herbicide, a fungicide or a plant growth regulator, and agricultural adjuvants.

A typical description of the technical solutions provided in the present disclosure will be made below in conjunction with examples and comparative examples.

Specific hydrophobic herbicides used in the examples and the comparative examples are as follows:
Hydrophobic herbicides: flumioxazin 51% granules (trade name: VALOR, purchased from VALENT), and fluridone 480g/L suspension (trade name: Longcaojing, purchased from Max (Rudong) Chemicals Co., Ltd.).

(I) Mobility experiment of flumioxazin in soil

Example 1

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from $C_9$-$C_{11}$ alkyl alcohol polyoxyethylene polyoxypropylene ether (trade name: SYNERGEN W06, purchased from CLARIANT) and N,N-dimethyloctanamide in a weight ratio of 2:1.

Example 2

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from iso-tridecanol polyoxyethylene ether and N, N-dimethyldecanamide in a weight ratio of 1:2.

Example 3

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from tridecanol polyoxyethylene ether and N,N-dimethylbutyramide in a weight ratio of 1:1.5.

Example 4

This example provides a herbicide composition spray solution prepared by the following steps: 0.5 g of flumioxazin 51 % granules and 0.5 g of herbicide auxiliary agent were added to 9 g of water, and the mixture was stirred to form the spray solution. The herbicide auxiliary agent was prepared from isooctanol polyoxyethylene ether and N,N-dimethyloctanamide in a weight ratio of 1:0.1.

Example 5

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from octadecanol polyoxyethylene ether and N,N-dimethylbutyramide in a weight ratio of 1:10.

Example 6

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from isooctanol polyoxyethylene polyoxypropylene ether and N,N-dimethyloctanamide in a weight ratio of 1:0.01.

Example 7

This example provides a herbicide composition spray solution prepared by the following steps: 0.5 g of flumioxazin 51% granules and 0.5 g of herbicide auxiliary agent were added to 9 g of water, and the mixture was stirred to form the spray solution. The herbicide auxiliary agent was prepared from octadecanol polyoxyethylene ether and N,N-dimethylbutyramide in a weight ratio of 1:20.

Comparative Example 1

This comparative example provides a spray solution prepared by the following steps: 0.5 g of flumioxazin 51% granules was added to 9.5 g of water, and the mixture was stirred to form the spray solution.

Comparative Example 2

This comparative example provides a spray solution prepared by the following steps: 0.5 g of flumioxazin 51% granules and 0.5 g of adjuvant were added to 9 g of water, and the mixture was stirred to form the spray solution. The adjuvant was a blend of vegetable oil methyl esters and nonionic emulsifiers (tank-mix adjuvant, trade name: HASTEN, purchased from VICCHEM).

Comparative Example 3

This comparative example provides a herbicide spray solution prepared by the following steps: 0.5 g of flumioxazin 51% granules and 0.5 g of iso-tridecanol polyoxyethylene ether were added to 9 g of water, and the mixture was stirred to form the spray solution.

Comparative Example 4

This comparative example provides a herbicide spray solution prepared by the following steps: 0.5 g of flumioxazin 51% granules and 0.5 g of N,N-dimethyldecanamide were added to 9 g of water, and the mixture was stirred to form the spray solution.

The spray solutions provided in Examples 1 to 7 and Comparative Examples 1 to 4 were respectively applied the soil surface.

The test was performed according to a column leaching method in GB/T 31270.5-2014. The soil columns had a diameter of 4 cm and a height of 30 cm. After the surface of the soil column was subjected to different spray treatments, the soil column was leached with water according to the test method. After the completion of the leaching, the percentage of the content of herbicide in different depths of soil in relation to the total content of herbicide in soil was tested. The soils used were loam (with an organic content of 1.35%, a pH of 7.5 and a water content of 1.5%) and clay (with an organic content of 0.7%, a pH of 8.5 and a water content of 1.5%).

The distributions of the spray solutions provided in Examples 1 to 7 and Comparative Examples 1 to 4 in different soils and different depths were respectively determined. Table 1 shows the result of distribution of flumioxazin in loam, and Table 2 shows the result of distribution of flumioxazin in clay.

Table 1 Distribution of flumioxazin in loam

| | Depth of soil (cm) | | | |
|---|---|---|---|---|
| | 0-2 | 2-4 | 4-6 | 6-30 |
| Example 1 | 85.07% | 13.14% | 1.78% | 0.01% |
| Example 2 | 63.07% | 32.14% | 4.44% | 0.35% |
| Example 3 | 79.52% | 18.10% | 2.11% | 0.27% |
| Example 4 | 85.13% | 12.78% | 2.02% | 0.07% |
| Example 5 | 81.07% | 17.85% | 1.05% | 0.03% |
| Example 6 | 94.37% | 3.98% | 1.65% | 0.00% |
| Example 7 | 95.72% | 3.60% | 0.68% | 0.00% |
| Comparative Example 1 | 99.94% | 0.04% | 0.02% | 0.00% |

(continued)

| | Depth of soil (cm) | | | |
|---|---|---|---|---|
| | 0-2 | 2-4 | 4-6 | 6-30 |
| Comparative Example 2 | 97.71% | 2.25% | 0.04% | 0.00% |
| Comparative Example 3 | 99.51% | 0.26% | 0.23% | 0.00% |
| Comparative Example 4 | 96.60% | 2.73% | 0.67% | 0.00% |

Table 2 Distribution of flumioxazin in clay

| | Depth of soil (cm) | | | |
|---|---|---|---|---|
| | 0-2 | 2-4 | 4-6 | 6-30 |
| Example 1 | 82.75% | 15.48% | 1.70% | 0.07% |
| Example 2 | 58.17% | 30.60% | 10.47% | 0.76% |
| Example 3 | 77.21% | 19.05% | 3.16% | 0.58% |
| Example 4 | 80.40% | 17.56% | 2.04% | 0.00% |
| Example 5 | 74.71% | 23.90% | 1.29% | 0.10% |
| Example 6 | 94.88% | 4.01% | 0.97% | 0.14% |
| Example 7 | 93.90% | 4.82% | 1.28% | 0.00% |
| Comparative Example 1 | 99.50% | 0.23% | 0.27% | 0.00% |
| Comparative Example 2 | 94.35% | 3.52% | 1.49% | 0.64% |
| Comparative Example 3 | 99.12% | 0.80% | 0.08% | 0.00% |
| Comparative Example 4 | 95.20% | 3.31% | 1.49% | 0.00% |

(II) Mobility experiment of fluridone in soil

Example 1

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from C9-C11 alkyl alcohol polyoxyethylene polyoxypropylene ether (trade name: SYNERGEN W06, purchased from CLARIANT) and N,N-dimethyloctanamide in a weight ratio of 1:0.5.

Example 2

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from iso-tridecanol polyoxyethylene ether and N,N-dimethyldecanamide in a weight ratio of 1:2.

Example 3

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from tridecanol polyoxyethylene ether and N,N-dimethylbutyramide in a weight ratio of 1:1.5.

Example 4

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from isooctanol polyoxyethylene ether and N,N-dimethyloctanamide in a weight ratio of 1:0.1.

Example 5

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from octadecanol polyoxyethylene ether and N,N-dimethylbutyramide in a weight ratio of 1:10.

Example 6

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from isooctanol polyoxyethylene polyoxypropylene ether and N,N-dimethyloctanamide in a weight ratio of 1:0.01.

Example 7

This example provides a herbicide composition spray solution prepared by the following steps: 0.5 g of fluridone 480g/L suspension and 0.5 g of herbicide auxiliary agent were added to 9 g of water, and the mixture was stirred to form the spray solution. The herbicide auxiliary agent was prepared from octadecanol polyoxyethylene ether and N,N-dimethylbutyramide in a weight ratio of 1:20.

Comparative Example 1

This comparative example provides a spray solution prepared by the following steps: 0.5 g of fluridone 480g/L suspension was added to 9.5 g of water, and the mixture was stirred to form the spray solution.

Comparative Example 2

This comparative example provides a herbicide composition spray solution prepared by the following steps: 0.5 g of fluridone 480g/L suspension and 0.5 g of adjuvant were added to 9 g of water, and the mixture was stirred to form the spray solution. The adjuvant was a blend of vegetable oil methyl esters and nonionic emulsifiers (tank-mix adjuvant, trade name: HASTEN, purchased from VICCHEM).

Comparative Example 3

This comparative example provides a spray solution prepared by the following steps: 0.5 g of fluridone 480 g/L suspension and 0.5 g of iso-tridecanol polyoxyethylene ether were added to 9 g of water, and the mixture was stirred to form the spray solution.

Comparative Example 4

This comparative example provides a spray solution prepared by the following steps: 0.5 g of fluridone 480 g/L suspension and 0.5 g of N,N-dimethyldecanamide were added to 9 g of water, and the mixture was stirred to form the spray solution.

The spray solutions provided in Examples 1 to 7 and Comparative Examples 1 to 4 were respectively applied the soil surface.

The test was performed according to a column leaching method in GB/T 31270.5-2014. The test method was as described in (I), and will not be repeated here. The soils used were loam (with an organic content of 1.35%, a pH of 7.5 and a water content of 1.5%) and black loam (with an organic content of 2.8%, a pH of 6.5 and a water content of 1.8%).

The distributions of the spray solutions provided in Examples 1 to 7 and Comparative Examples 1 to 4 in different soils and different depths were respectively determined. Table 3 shows the result of distribution of fluridone in loam, and

Table 4 shows the result of distribution of fluridone in black loam.

Table 3 Distribution of fluridone in loam

| | Depth of soil (cm) | | | |
|---|---|---|---|---|
| | 0-2 | 2-4 | 4-6 | 6-30 |
| Example 1 | 75.06% | 23.15% | 1.79% | 0.00% |
| Example 2 | 77.54% | 19.44% | 3.00% | 0.02% |
| Example 3 | 77.01% | 20.50% | 2.48% | 0.01% |
| Example 4 | 78.12% | 19.92% | 1.93% | 0.03% |
| Example 5 | 83.27% | 14.65% | 2.08% | 0.00% |
| Example 6 | 93.80% | 4.21% | 1.99% | 0.00% |
| Example 7 | 98.10% | 1.27% | 0.63% | 0.00% |
| Comparative Example 1 | 99.13% | 0.59% | 0.28% | 0.00% |
| Comparative Example 2 | 93.19% | 5.94% | 0.87% | 0.00% |
| Comparative Example 3 | 94.05% | 3.32% | 2.53% | 0.10% |
| Comparative Example 4 | 98.64% | 1.20% | 0.16% | 0.00% |

Table 4 Distribution of fluridone in black loam

| | Depth of soil (cm) | | | |
|---|---|---|---|---|
| | 0-2 | 2-4 | 4-6 | 6-30 |
| Example 1 | 75.17% | 15.09% | 9.74% | 0.00% |
| Example 2 | 79.74% | 12.79% | 7.41% | 0.06% |
| Example 3 | 78.21% | 18.30% | 3.40% | 0.09% |
| Example 4 | 80.07% | 15.94% | 3.91% | 0.08% |
| Example 5 | 81.33% | 16.10% | 2.57% | 0.00% |
| Example 6 | 94.32% | 3.12% | 2.56% | 0.00% |
| Example 7 | 97.90% | 1.87% | 0.23% | 0.00% |
| Comparative Example 1 | 99.41% | 0.50% | 0.09% | 0.00% |
| Comparative Example 2 | 97.39% | 2.14% | 0.42% | 0.05% |
| Comparative Example 3 | 95.21% | 4.10% | 0.69% | 0.00% |
| Comparative Example 4 | 99.00% | 0.95% | 0.05% | 0.00% |

(III) Herbicidal activity experiment of flumioxazin

The herbicidal activity tests of flumioxazin in the following treatment examples and comparative treatment examples were all performed according to a greenhouse test. Plastic pots were filled with a given amount of soil with an organic content of 3.0%, a pH of 8.0 and a water content of 1.8%. 15 to 20 seeds of Amaranthus retroflexus were sown on the soil surface, covered with 0.5 to 1 cm of fine soil, and cultured in a greenhouse. After 24 hours, the soil was subjected to spray treatments with chemicals. Each treatment was repeated 4 times, and the treatment without chemicals was used as a blank control. After the treatments, the seeds were cultured in the greenhouse, and growth of the Amaranthus retroflexus was observed regularly. About 30 days after treatment, the number of weed plants and the fresh weight of aboveground parts in the treatment examples and the comparative treatment examples were determined, and the growth inhibition rate % was calculated according to the following formula:

$$\text{Growth inhibition rate\%} = \frac{\text{biomass of untreated plot} - \text{biomass of treated plot}}{\text{biomass of untreated plot}} x100$$

Treatment Example 1

Flumioxazin 51% granules and a herbicide auxiliary agent were diluted with water to form a spray solution. A weight ratio of the flumioxazin (technical) to the herbicide auxiliary agent was 1:5. The herbicide auxiliary agent was prepared with C9-C11 alkyl alcohol polyoxyethylene polyoxypropylene ether (trade name: SYNERGEN W06, purchased from CLARIANT) and N,N-dimethyloctanamide in a weight ratio of 1:0.5.

The spray solution was sprayed to the soil in the pot at a flumioxazin dose of 75 g ai./ha and a herbicide auxiliary agent dose of 375 g/ha in an amount of 200 L/ha.

Treatment Example 2

Flumioxazin 51% granules and a herbicide auxiliary agent were diluted with water to form a spray solution. A weight ratio of the flumioxazin (technical) to the herbicide auxiliary agent was 1:5. The herbicide auxiliary agent was prepared from iso-tridecanol polyoxyethylene ether and N,N-dimethyldecanamide in a weight ratio of 1:2.

The spray solution was sprayed to the soil in the pot at a flumioxazin dose of 75 g ai./ha and a herbicide auxiliary agent dose of 375 g/ha in an amount of 200 L/ha.

Treatment Example 3

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was prepared from iso-tridecanol polyoxyethylene ether and N,N-dimethyldecanamide in a weight ratio of 1:2.

The spray solution was sprayed to the soil in the pot at a flumioxazin dose of 75 g ai./ha and a herbicide auxiliary agent dose of 750g/ha in an amount of 200 L/ha.

Treatment Example 4

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was prepared from iso-tridecanol polyoxyethylene ether and N,N-dimethyldecanamide in a weight ratio of 1:2.

The spray solution was sprayed to the soil in the pot at a flumioxazin dose of 45g ai./ha and a herbicide auxiliary agent dose of 450g/ha in an amount of 200 L/ha.

Treatment Example 5

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was prepared from isooctanol polyoxyethylene ether and N,N-dimethyloctanamide in a weight ratio of 1:0.1.

The spray solution was sprayed to the soil in the pot at a flumioxazin dose of 75 g ai./ha and a herbicide auxiliary agent dose of 750 g/ha in an amount of 200 L/ha.

Treatment Example 6

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was prepared from isooctanol polyoxyethylene ether and N,N-dimethyloctanamide in a weight ratio of 1:10.

The spray solution was sprayed to the soil in the pot at a flumioxazin dose of 75 g ai./ha and a herbicide auxiliary agent dose of 750 g/ha in an amount of 200 L/ha.

Comparative Treatment Example 1

Treatment with flumioxazin: Flumioxazin 51% granules (with no herbicide auxiliary agent) were diluted with water to form a spray solution, and the spray solution was sprayed to the soil in the pot at a flumioxazin (technical) dose of 75 g ai./ha in an amount of 200 L/ha.

Comparative Treatment Example 2

Treatment with herbicide auxiliary agent: A herbicide auxiliary agent was diluted with water. The herbicide auxiliary agent was prepared from C9-C11 alkyl alcohol polyoxyethylene polyoxypropylene ether and N,N-dimethyloctanamide in a weight ratio of 2:1.

The spray solution was sprayed to the soil in the pot at a herbicide auxiliary agent dose of 750 g/ha in an amount of 200 L/ha.

Comparative Treatment Example 3

Treatment with herbicide auxiliary agent: A herbicide auxiliary agent was diluted with water. The herbicide auxiliary agent was prepared from iso-tridecanol polyoxyethylene ether and N,N-dimethyldecanamide in a weight ratio of 1:2.

The spray solution was sprayed to the soil in the pot at a herbicide auxiliary agent dose of 750 g/ha in an amount of 200 L/ha.

Comparative Treatment Example 4

Only water was sprayed to the soil in the pot in an amount of 200 L/ha.

Comparative Treatment Example 5

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was iso-tridecanol polyoxyethylene ether.

The spray solution was sprayed to the soil in the pot at a flumioxazin dose of 75 g ai./ha and a herbicide auxiliary agent dose of 375 g/ha in an amount of 200 L/ha.

Comparative Treatment Example 6

Flumioxazin 51% granules and a herbicide auxiliary agent were diluted with water to form a spray solution. A weight ratio of the flumioxazin (technical) to the herbicide auxiliary agent was 1:10. The herbicide auxiliary agent was N,N-dimethyloctanamide.

The spray solution was sprayed to the soil in the pot at a flumioxazin dose of 75 g ai./ha and a herbicide auxiliary agent dose of 375 g/ha in an amount of 200 L/ha.

30 days after treatment, the growth inhibition rate of plants was determined. The results are shown in Table 5.

Table 5 Test results of herbicidal activity of flumioxazin and herbicide auxiliary agent against Amaranthus retroflexus

| | Inhibition rate on fresh weight (%) | Inhibition rate on number of plants (%) |
|---|---|---|
| Treatment Example 1 | 96.5 | 98.5 |
| Treatment Example 2 | 95.8 | 96.0 |
| Treatment Example 3 | 100.0 | 100.0 |
| Treatment Example 4 | 94.1 | 95.4 |
| Treatment Example 5 | 92.3 | 93.5 |
| Treatment Example 6 | 94.2 | 94.9 |
| Comparative Treatment Example 1 | 76.6 | 80.4 |
| Comparative Treatment Example 2 | 0 | 0 |
| Comparative Treatment Example 3 | 0 | 0 |
| Comparative Treatment Example 4 | 0 | 0 |
| Comparative Treatment Example 5 | 79.1 | 81.5 |
| Comparative Treatment Example 6 | 81.3 | 82.9 |

(IV) Herbicidal activity experiment of fluridone

The herbicidal activity tests of fluridone in the following treatment examples and comparative treatment examples were all performed according to a greenhouse test. Plastic pots were filled with a given amount of soil with an organic content of 3.0%, a pH of 8.0 and a water content of 1.8%. 15 to 20 seeds of Solanum nigrum were sown on the soil surface, covered with 0.5 to 1 cm of fine soil, and cultured in a greenhouse. After 24 hours, the soil was subjected to spray treatments with chemicals. Each treatment was repeated 4 times, and the treatment without chemicals was used as a blank control. After the treatments, the seeds were cultured in the greenhouse, and growth of the Solanum nigrum was observed regularly. About 30 days after treatment, the number of weed plants and the fresh weight of aboveground parts in the treatment examples and the comparative treatment examples were determined, and the growth inhibition rate % was calculated according to the following formula:

$$\text{Growth inhibition rate \%} = \frac{\text{biomass of untreated plot} - \text{biomass of treated plot}}{\text{biomass of untreated plot}} x100$$

Treatment Example 1

A fluridone 480 g/L suspension and a herbicide auxiliary agent were diluted with water to form a spray solution. A weight ratio of the fluridone to the herbicide auxiliary agent was 1:4. The herbicide auxiliary agent was prepared from C9-C11 alkyl alcohol polyoxyethylene polyoxypropylene ether and N,N-dimethyloctanamide in a weight ratio of 1:0.5.

The spray solution was sprayed to the soil in the pot at a fluridone dose of 250 g ai./ha and a herbicide auxiliary agent dose of 1000 g/ha in an amount of 400 L/ha.

Treatment Example 2

A fluridone 480 g/L suspension and a herbicide auxiliary agent were diluted with water to form a spray solution. A weight ratio of the fluridone to the herbicide auxiliary agent was 1:2. The herbicide auxiliary agent was prepared from iso-tridecanol polyoxyethylene ether and N,N-dimethyldecanamide in a weight ratio of 1:2.

The spray solution was sprayed to the soil in the pot at a fluridone dose of 250 g ai./ha and a herbicide auxiliary agent dose of 500 g/ha in an amount of 400 L/ha.

Treatment Example 3

A fluridone 480 g/L suspension and a herbicide auxiliary agent were diluted with water. A weight ratio of the fluridone (technical) to the herbicide auxiliary agent was 1:2. The herbicide auxiliary agent was prepared from C9-C11 alkyl alcohol polyoxyethylene polyoxypropylene ether and N,N-dimethyloctanamide in a weight ratio of 1:0.5.

The spray solution was sprayed to the soil in the pot at a fluridone dose of 200g ai./ha and a herbicide auxiliary agent dose of 400g/ha in an amount of 400 L/ha.

Treatment Example 4

A fluridone 480 g/L suspension and a herbicide auxiliary agent were diluted with water. A weight ratio of the fluridone (technical) to the herbicide auxiliary agent was 1:20. The herbicide auxiliary agent was prepared from C9-C11 alkyl alcohol polyoxyethylene polyoxypropylene ether and N,N-dimethyloctanamide in a weight ratio of 1:0.5.

The spray solution was sprayed to the soil in the pot at a fluridone dose of 200g ai./ha and a herbicide auxiliary agent dose of 4000g/ha in an amount of 400 L/ha.

Treatment Example 5

A fluridone 480 g/L suspension and a herbicide auxiliary agent were diluted with water to form a spray solution. A weight ratio of the fluridone to the herbicide auxiliary agent was 1:10. The herbicide auxiliary agent was prepared from isooctanol polyoxyethylene ether and N,N-dimethyloctanamide in a weight ratio of 1:0.1.

The spray solution was sprayed to the soil in the pot at a fluridone dose of 250g ai./ha and a herbicide auxiliary agent dose of 2500g/ha in an amount of 400 L/ha.

Treatment Example 6

A fluridone 480 g/L suspension and a herbicide auxiliary agent were diluted with water to form a spray solution. A weight ratio of the fluridone to the herbicide auxiliary agent was 1:10. The herbicide auxiliary agent was prepared from isooctanol polyoxyethylene ether and N,N-dimethyloctanamide in a weight ratio of 1:10.
The spray solution was sprayed to the soil in the pot at a fluridone dose of 250g ai./ha and a herbicide auxiliary agent dose of 2500g/ha in an amount of 400 L/ha.

Comparative Treatment Example 1

Treatment with fluridone: Fluridone (with no herbicide auxiliary agent) was diluted with water to form a spray solution, and the spray solution was sprayed to the soil in the pot at a fluridone(technical) dose of 250 g ai./ha in an amount of 400 L/ha.

Comparative Treatment Example 2

A fluridone 480 g/L suspension and an adjuvant were diluted with water to form a spray solution. The adjuvant was a blend of vegetable oil methyl esters and nonionic emulsifiers (tank-mix adjuvant, trade name: HASTEN, purchased from VICCHEM). A weight ratio of the fluridone to the adjuvant was 1:2.
The spray solution was sprayed to the soil in the pot at a fluridone dose of 250 g ai./ha and a herbicide auxiliary agent dose of 500 g/ha in an amount of 400 L/ha.

Comparative Treatment Example 3

Only water was sprayed to the soil in the pot in an amount of 200 L/ha.

Comparative Treatment Example 4

Treatment with herbicide auxiliary agent: A herbicide auxiliary agent was diluted with water. The herbicide auxiliary agent was prepared from C9-C11 alkyl alcohol polyoxyethylene polyoxypropylene ether and N,N-dimethyloctanamide in a weight ratio of 1:0.5.
The spray solution was sprayed to the soil in the pot at a herbicide auxiliary agent dose of 1000g/ha in an amount of 400 L/ha.

Comparative Treatment Example 5

A fluridone 480 g/L suspension and a herbicide auxiliary agent were diluted with water to form a spray solution. A weight ratio of the fluridone (technical) to the herbicide auxiliary agent was 1:2. The herbicide auxiliary agent was $C_9$-$C_{11}$ alkyl alcohol polyoxyethylene polyoxypropylene ether.
The spray solution was sprayed to the soil in the pot at a fluridone dose of 200g ai./ha and a herbicide auxiliary agent dose of 400g/ha in an amount of 400 L/ha.

Comparative Treatment Example 6

A fluridone 480 g/L suspension and a herbicide auxiliary agent were diluted with water to form a spray solution. A weight ratio of the fluridone (technical) to the herbicide auxiliary agent was 1:2. The herbicide auxiliary agent was N, N-dimethyloctanamide.
The spray solution was sprayed to the soil in the pot at a fluridone dose of 200 g ai./ha and a herbicide auxiliary agent dose of 400 g/ha in an amount of 400 L/ha.
30 days after treatment, the growth inhibition rate of plants was determined. The results are shown in Table 6.

Table 6 Test results of herbicidal activity of flumioxazin and herbicide auxiliary agent against Solanum nigrum

| | Inhibition rate on fresh weight (%) | Inhibition rate on number of plants (%) |
|---|---|---|
| Treatment Example 1 | 100.0 | 100.0 |
| Treatment Example 2 | 94.1 | 95.8 |
| Treatment Example 3 | 93.9 | 95.0 |

(continued)

| | Inhibition rate on fresh weight (%) | Inhibition rate on number of plants (%) |
|---|---|---|
| Treatment Example 4 | 98.3 | 99.4 |
| Treatment Example 5 | 96.2 | 97.1 |
| Treatment Example 6 | 94.5 | 95.1 |
| Comparative Treatment Example 1 | 66.7 | 71.4 |
| Comparative Treatment Example 2 | 79.8 | 82.5 |
| Comparative Treatment Example 3 | 0 | 0 |
| Comparative Treatment Example 4 | 0 | 0 |
| Comparative Treatment Example 5 | 78.1 | 80.2 |
| Comparative Treatment Example 6 | 77.6 | 79.5 |

Finally, it should be noted that the above examples are only used to illustrate, but not to limit the technical solutions of the present disclosure. Although the present disclosure has been described in detail with reference to the foregoing examples, those of ordinary skill in the art should understand that they can still modify the technical solutions described in the foregoing examples, or equivalently substitute some or all of the technical features. These modifications and substitutions do not make the essence of the corresponding technical solutions depart from the scope of the technical solutions of the examples of the present disclosure.

**Claims**

1. A herbicide auxiliary agent, comprising a fatty alcohol alkoxylated compound and an aliphatic substituted amide, wherein the fatty alcohol alkoxylated compound is a linear or branched $C_8$-$C_{22}$ alkyl fatty alcohol alkoxylated compound; and

   the aliphatic substituted amide has the following general formula:

   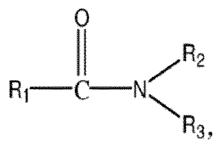

   wherein $R_1$ is linear or branched $C_4$-$C_{16}$ alkyl, $R_2$ and $R_3$ each are independently H, $CH_3$ or $C_2H_5$, and $R_2$ and $R_3$ are not both H.

2. The herbicide auxiliary agent according to claim 1, wherein the fatty alcohol alkoxylated compound comprises at least one of a fatty alcohol ethoxylated compound, a fatty alcohol propoxylated compound and a fatty alcohol ethoxylated and propoxylated compound.

3. The herbicide auxiliary agent according to claim 1, wherein in the herbicide auxiliary agent, a weight ratio of the fatty alcohol alkoxylated compound to the aliphatic substituted amide ranges from 1:0.1 to 1:10, preferably 1:0.5 to 1:1.5.

4. Use of the herbicide auxiliary agent according to any of claims 1 to 3 in improving activity of a hydrophobic herbicide, wherein preferably, the herbicide auxiliary agent is applied to soil at a dose of 0.1 to 50 kg/ha, preferably 1 to 20 kg/ha.

5. A herbicide composition, comprising a hydrophobic herbicide and the herbicide auxiliary agent according to any of claims 1 to 3, wherein a weight ratio of the hydrophobic herbicide to the herbicide auxiliary agent ranges from 1:0.6 to 1:50.

6. The herbicide composition according to claim 5, wherein the weight ratio of the hydrophobic herbicide to the herbicide auxiliary agent ranges from 1: 1 to 1:30, preferably 1:2 to 1:20.

7. The herbicide composition according to claim 5, wherein the hydrophobic herbicide comprises at least one of an acetyl-CoA carboxylase inhibitor, an acetolactate synthase inhibitor, a photosynthesis inhibitor, a protoporphyrinogen oxidase inhibitor, a carotenoid synthesis inhibitor, a 4-hydroxyphenylpyruvate dioxygenase inhibitor, a mitotic inhibitor, a cell division inhibitor, a cell wall synthesis inhibitor, an auxin herbicide, an auxin transport inhibitor, cinmethylin, flamprop, maleic hydrazide, cumyluron, daimuron and indanofan;

   preferably, the acetyl-CoA carboxylase inhibitor comprises at least one of clodinafop-propargyl, clethodim and pinoxaden;
   preferably, the acetolactate synthase inhibitor comprises at least one of florasulam, penoxsulam, tribenuron-methyl, mesosulfuron-methyl and bispyribac-sodium;
   preferably, the photosynthesis inhibitor comprises at least one of terbacil, amicarbazone, diuron, prometryn and diquat;
   preferably, the protoporphyrinogen oxidase inhibitor comprises at least one of flumioxazin, sulfentrazone and saflufenacil;
   preferably, the carotenoid synthesis inhibitor comprises at least one of fluridone, flurtamone, clomazone, diflufenican and norflurazon;
   preferably, the 4-hydroxyphenylpyruvate dioxygenase inhibitor comprises mesotrione and/or isoxaflutole;
   preferably, the mitotic inhibitor comprises at least one of benfluralin, trifluralin, prodiamine, pendimethalin, dithiopyr and chlorpropham;
   preferably, the cell division inhibitor comprises at least one of alachlor, butachlor, S-metolachlor, flufenacet, mefenacet and cafenstrole;
   preferably, the cell wall synthesis inhibitor comprises at least one of flupoxam, isoxaben and dichlobenil;
   preferably, the auxin herbicide comprises at least one of fluroxypyr, dicamba and quinclorac; and
   preferably, the auxin transport inhibitor comprises naptalam and/or diflufenzopyr.

8. The herbicide composition according to claim 5, wherein the hydrophobic herbicide is at least one selected from the group consisting of flufenacet, flumioxazin, fluridone, isoxaflutole, diclosulam, penoxsulam, sulfentrazone, saflufenacil, norflurazon, diflufenican, pendimethalin and prodiamine.

9. An application method for a herbicide composition, comprising the following steps:

   diluting the herbicide composition according to any of claims 5 to 8 with water to form a sprayable solution, and then applying the sprayable solution to a plant growth place;
   preferably, the plant growth place includes soil;
   preferably, the herbicide auxiliary agent is applied to the soil at a dose of 0.1 to 50 kg/ha, preferably 1 to 20 kg/ha; and
   preferably, the hydrophobic herbicide is applied to the soil at a dose of 0.01 to 40 kg/ha.

10. The application method according to claim 9, wherein the sprayable solution formed by the dilution comprises other active components and/or agricultural adjuvants; and
   the active component is at least one of a herbicide, a fungicide and a plant growth regulator.

## INTERNATIONAL SEARCH REPORT

International application No.
**PCT/CN2021/088988**

**A. CLASSIFICATION OF SUBJECT MATTER**

A01N 25/30(2006.01)i； A01N 25/02(2006.01)i； A01P 13/00(2006.01)i

According to International Patent Classification (IPC) or to both national classification and IPC

**B. FIELDS SEARCHED**

Minimum documentation searched (classification system followed by classification symbols)

A01N; A01P

Documentation searched other than minimum documentation to the extent that such documents are included in the fields searched

Electronic data base consulted during the international search (name of data base and, where practicable, search terms used)

DWPI, SIPOABS, CNABS, CJFD, CNKI, STN(REG, CAPLUS): 脂肪醇烷氧基, 脂肪醇乙氧基, 脂肪醇丙氧基, 脂肪醇乙氧基丙氧基, 醇聚氧乙烯醚, 醇聚氧丙烯醚, 醇聚氧乙烯聚氧丙烯醚, 酰胺, 二甲基丁酰胺, 二甲基癸酰胺, 二甲基辛酰胺, 氟啶草酮 polyalkoxylated fatty alcohols, fluridone, nonionic surfactants, amide, amides, Ethoxylatedpropoxylated, Alkylalcoholethoxylatepropoxylate, Dimethyloctanamide

**C. DOCUMENTS CONSIDERED TO BE RELEVANT**

| Category* | Citation of document, with indication, where appropriate, of the relevant passages | Relevant to claim No. |
|---|---|---|
| PX | CN 112006025 A (SINO-AGRI LEADING BIOSCIENCES CO., LTD.) 01 December 2020 (2020-12-01)<br>description paragraphs [0005]-[0090], claims 1-10 | 1-10 |
| X | WO 2019172617 A1 (FARMHANNONG CO., LTD.) 12 September 2019 (2019-09-12)<br>description paragraphs [0004]-[0149], claims 1-4, 6, 15-16 | 1-10 |
| X | CN 104378980 A (BASF SE) 25 February 2015 (2015-02-25)<br>description paragraphs [0109], [0122]-[0132], claims 1, 7, 15 | 1-10 |
| X | CN 109452267 A (SHENZHEN NOPOSION AGROCHEMICALS CO., LTD.) 12 March 2019 (2019-03-12)<br>claims 11-13 | 1-10 |
| X | CN 107734968 A (NUFARM AUSTRALIA LTD.) 23 February 2018 (2018-02-23)<br>description paragraphs [0012]-[0390], claims 1-13, 23-25 | 1-10 |
| X | CN 109964934 A (JIANGSU AIJIN AGROCHEMICAL CO., LTD.) 05 July 2019 (2019-07-05)<br>Claims 1-6 | 1-10 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 July 2021** | **30 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT

International application No.
PCT/CN2021/088988

C. DOCUMENTS CONSIDERED TO BE RELEVANT

| Category* | Citation of document, with indication, where appropriate, of the relevant passages | Relevant to claim No. |
|---|---|---|
| X | CN 102524262 A (SHANGHAI SINOFLUORO SCIENTIFIC CO., LTD.) 04 July 2012 (2012-07-04) description paragraphs [0005]-[0043], claims 1-10 | 1-10 |
| X | CN 109511665 A (CHINA AGRICULTURAL UNIVERSITY) 26 March 2019 (2019-03-26) description paragraphs [0006]-[0107], claims 1-6 | 1-10 |
| X | US 10039280 B1 (SEPRO CORP.) 07 August 2018 (2018-08-07) description, column 1, line 53 to column 7, line 15 | 1-10 |
| A | CN 109563441 A (CLARIANT INT. LTD.) 02 April 2019 (2019-04-02) entire document | 1-10 |
| A | CN 104918490 A (CLARIANT INT. LTD.) 16 September 2015 (2015-09-16) entire document | 1-10 |

Form PCT/ISA/210 (second sheet) (January 2015)

**INTERNATIONAL SEARCH REPORT**
**Information on patent family members**

International application No.
**PCT/CN2021/088988**

| Patent document cited in search report | | | Publication date (day/month/year) | Patent family member(s) | | | Publication date (day/month/year) |
|---|---|---|---|---|---|---|---|
| CN | 112006025 | A | 01 December 2020 | None | | | |
| WO | 2019172617 | A1 | 12 September 2019 | KR | 102057445 | B1 | 14 January 2020 |
| | | | | AR | 114426 | A1 | 02 September 2020 |
| | | | | KR | 20190105789 | A | 18 September 2019 |
| | | | | AU | 2019231464 | A1 | 10 September 2020 |
| | | | | CN | 111818799 | A | 23 October 2020 |
| | | | | BR | 112020017457 | A2 | 22 December 2020 |
| | | | | US | 2021037819 | A1 | 11 February 2021 |
| CN | 104378980 | A | 25 February 2015 | EA | 023288 | B1 | 31 May 2016 |
| | | | | EA | 201400689 | A1 | 30 January 2015 |
| | | | | BR | 112014013611 | A2 | 13 June 2017 |
| | | | | WO | 2013087416 | A1 | 20 June 2013 |
| | | | | AR | 089236 | A1 | 06 August 2014 |
| | | | | AU | 2012350953 | A1 | 03 July 2014 |
| | | | | US | 2014371075 | A1 | 18 December 2014 |
| | | | | CN | 104378980 | B | 24 August 2016 |
| | | | | EP | 2790500 | A1 | 22 October 2014 |
| | | | | CA | 2856786 | A1 | 20 June 2013 |
| | | | | PL | 2790500 | T3 | 31 May 2016 |
| | | | | BR | 112014013611 | A8 | 13 June 2017 |
| | | | | CA | 2856786 | C | 31 March 2020 |
| | | | | IN | 4951CHN2014 | A | 18 September 2015 |
| | | | | EP | 2790500 | B1 | 25 November 2015 |
| CN | 109452267 | A | 12 March 2019 | None | | | |
| CN | 107734968 | A | 23 February 2018 | AU | 2016257148 | A1 | 16 November 2017 |
| | | | | CN | 107734968 | B | 12 January 2021 |
| | | | | WO | 2016176740 | A1 | 10 November 2016 |
| | | | | AU | 2016257148 | B2 | 18 October 2018 |
| | | | | US | 2018153161 | A1 | 07 June 2018 |
| | | | | EP | 3291674 | A1 | 14 March 2018 |
| | | | | AR | 104556 | A1 | 26 July 2017 |
| | | | | US | 10772323 | B2 | 15 September 2020 |
| | | | | CA | 2984808 | A1 | 10 November 2016 |
| | | | | EP | 3291674 | A4 | 21 November 2018 |
| | | | | BR | 112017023940 | A2 | 17 July 2018 |
| CN | 109964934 | A | 05 July 2019 | None | | | |
| CN | 102524262 | A | 04 July 2012 | None | | | |
| CN | 109511665 | A | 26 March 2019 | None | | | |
| US | 10039280 | B1 | 07 August 2018 | None | | | |
| CN | 109563441 | A | 02 April 2019 | EP | 3491109 | A1 | 05 June 2019 |
| | | | | MX | 2019001237 | A | 01 August 2019 |
| | | | | WO | 2018024430 | A1 | 08 February 2018 |
| | | | | EP | 3241887 | A1 | 08 November 2017 |
| | | | | BR | 112019001317 | A2 | 30 April 2019 |
| | | | | AR | 109212 | A1 | 07 November 2018 |
| | | | | JP | 2019528339 | A | 10 October 2019 |
| CN | 104918490 | A | 16 September 2015 | AU | 2017258911 | A1 | 30 November 2017 |
| | | | | EP | 2914108 | A1 | 09 September 2015 |
| | | | | BR | 112015009806 | B1 | 15 September 2020 |

Form PCT/ISA/210 (patent family annex) (January 2015)

**INTERNATIONAL SEARCH REPORT**
**Information on patent family members**

International application No.
**PCT/CN2021/088988**

| Patent document cited in search report | Publication date (day/month/year) | Patent family member(s) | Publication date (day/month/year) |
|---|---|---|---|
| | | AU 2013339790 A1 | 21 May 2015 |
| | | ES 2653926 T3 | 09 February 2018 |
| | | DK 2914108 T3 | 11 December 2017 |
| | | WO 2014067663 A1 | 08 May 2014 |
| | | CN 104918490 B | 15 December 2017 |
| | | EP 2914108 B1 | 01 November 2017 |
| | | AU 2013339790 B2 | 10 August 2017 |
| | | CA 2890378 A1 | 08 May 2014 |
| | | AU 2017258911 B2 | 16 May 2019 |
| | | BR 112015009806 A2 | 11 July 2017 |
| | | US 10772324 B2 | 15 September 2020 |
| | | DE 102012021647 A1 | 08 May 2014 |
| | | US 2015320037 A1 | 12 November 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202010438384


### Non-patent literature cited in the description


- Pesticide Manual. British Crop Production Council, 2018
- The Pesticide Manual. British Crop Production Council, 2018